# EUROPÄISCHE PATENTANMELDUNG

(11) **EP 3 929 036 A1**
(43) Veröffentlichungstag der Anmeldung: **29.12.2021**
(21) Anmeldenummer: 21000184.8
(22) Anmeldetag: 13.07.2021
(51) Int. Cl.: B60R 3/00, B60R 9/06

(54) **TRITTPLATTE ZUM BEFESTIGEN AM KUGELKOPF EINER PKW-ANHÄNGER-KUPPLUNG**

(30) Priorität: 22.06.2020 DE 202020002699 U
(71) Anmelder: Meyer, Andreas, 67806 Rockenhausen (DE)
(72) Erfinder: Meyer, Andreas, 67806 Rockenhausen (DE)

(57) **Zusammenfassung**

Die Erfindung betrifft eine Trittplatte (1) zum Befestigen am Kugelkopf (31) einer PKW-Anhängerkupplung (30), mit einer Plattform (2), an deren Unterseite (4) eine zum Verklemmen mit dem Kugelkopf (31) bestimmte Klemmvorrichtung (8) vorgesehen ist, wobei die Klemmvorrichtung (8) einen nach unten offenen Raum (9') zur Aufnahme des Kugelkopfs (31) aufweist und eine an der Plattform (2) befindliche, den Klemmvorgang ermöglichende, von Hand betätigbare Verstelleinrichtung (18) vorgesehen ist.

Die Erfindung zeichnet sich dadurch aus, dass die Klemmvorrichtung (8) ein mit einem Schlitz (15) ausgestattetes Klemmstück (9) aufweist oder durch ein mit einem Schlitz (15) ausgestattetes Klemmstück (9) gebildet ist, das den nach unten offenen Raum (9') aufweist, welcher durch den Schlitz (15) unterbrochen ist, wobei der Raum (9') außermittig am Klemmstück (9) angeordnet und eine in das Klemmstück (9) ragende Sicherungseinrichtung (22) vorgesehen ist, die von der Plattform (2) getragen wird und auf der Oberseite (5) der Plattform (2) sichtbar ist und zum Anliegen an den Kugelkopf (31) vorgesehen und vertikalbeweglich sowie federbeaufschlagt an und in der Plattform (2) angeordnet ist und wobei die Verstelleinrichtung (18) eine Spindel (19) aufweist oder durch eine Spindel (19) gebildet ist, die zum Verändern der Breite des am Klemmstück (9) befindlichen Schlitzes (15) bestimmt ist.

## Beschreibung

Die Erfindung betrifft eine Trittplatte zum Befestigen am Kugelkopf einer PKW-Anhängerkupplung, mit einer Plattform, an deren Unterseite eine zum Verklemmen mit dem Kugelkopf bestimmte Klemmvorrichtung vorgesehen ist, wobei die Klemmvorrichtung einen nach unten offenen Raum zur Aufnahme des Kugelkopfs aufweist sowie mit einer an der Plattform befindlichen, den Klemmvorgang ermöglichenden, von Hand betätigbaren Verstelleinrichtung.

Das Dokument DE 20 2011 004 445 U1 beschreibt im Ausführungsbeispiel 3 eine derartige Trittplatte. Die als Ein- und Ausstiegshilfe für Hunde vorgesehene Trittplatte ist zum Aufsetzen auf den Kugelkopf einer PKW-Anhängerkupplung bestimmt. Die Trittplatte trägt an ihrer Unterseite eine mit einer nach unten offenen Aufnahme ausgestattete Klemmvorrichtung, mit deren Hilfe sich die Trittplatte, mit der offenen Aufnahme voraus, auf den Kugelkopf aufsetzen und anschließend mit Hilfe einer Verstelleinrichtung in die gewünschte Gebrauchslage bringen und verklemmen lässt. Das Verklemmen erfolgt dabei durch einen Hebel, der reibschlüssig und tangential gegen den Kugelkopf gepresst wird. Die Verstelleinrichtung dient umgekehrt auch zum Lösen der Trittplatte vom Kugelkopf. Über die Zuverlässigkeit der Arretierung der Trittplatte auf einem Kugelkopf und über die dadurch gegenüber dem Hundebesitzer gebotene Sicherheit bei der Anwendung dieser Trittplatte wird im genannten Dokument nicht berichtet.

Es ist Aufgabe der Erfindung, eine andere Ausführungsform einer eingangs genannten Trittplatte zu schaffen. Dabei soll die Trittplatte so gestaltet sein, dass dem Hundebesitzer angezeigt wird, ob dieser die Trittplatte auch optimal auf den Kugelkopf aufgesetzt hat, um nach erfolgtem Arretieren gegen unerwünschte Lageveränderungen oder vorzeitiges Lösen der Trittplatte gesichert zu sein.

Die Lösung der Aufgabe ist im Anspruch 1 beschrieben. Weitere Lösungsansätze finden sich in den Unteransprüchen.

Ein erster Vorteil der Erfindung besteht darin, dass dem Benutzer der vorgeschlagenen Trittplatte bei deren Anbringung auf dem Kugelkopf einer Anhängerkupplung angezeigt wird, ob der Kugelkopf in der optimalen Position vom Klemmstück der Klemmvorrichtung aufgenommen worden ist. Eine optimale Klemmung wird durch die vorgeschlagene Lösung dann erreicht, wenn sich die geometrische Längsachse der Spindel und der geometrische Mittelpunkt des Kugelkopfs auf einer gemeinsamen Ebene befinden. Für einen Benutzer sichtbar wird dies, wenn die Ebene der oberen Begrenzung der Sicherungseinrichtung identisch ist mit der oberen sichtbaren Ebene der Trittplatte. Ist dies nicht der Fall, liegt keine optimale Klemmwirkung vor und der Benutzer wird entsprechend aufmerksam gemacht.

Ein weiterer Vorteil besteht darin, dass der Kugelkopf außermittig vom Klemmstück aufgenommen wird. Um die Klemmwirkung zu erzielen, genügt eine minimale Veränderung des durch den vorgesehenen Schlitz gebildeten Abstands zweier Abschnitte des Klemmstücks, was bedeutet, dass beim Verklemmen oder beim Lösen der Trittstufe eine geringfügige, elastische, jedoch ausreichende Formveränderung des Klemmstücks erfolgt mit der Wirkung, dass höchstens eine Umdrehung der Spindel notwendig ist. Es ist kein Kurbeln oder mehrfaches Drehen der Spindel erforderlich, was eine wesentliche Bedienerfreundlichkeit bedeutet.

Die Erfindung wird anhand eines Ausführungsbeispiels näher erläutert. Es zeigt
- Fig. 1: die Rückseite eines PKWs in Seitenansicht mit Anhängerkupplung und aufgesetzter Trittplatte;
- Fig. 2: die Trittplatte in einer ersten Seitenansicht;
- Fig. 3: die Trittplatte in einer zweiten Seitenansicht;
- Fig. 4: eine Unteransicht der Trittplatte.

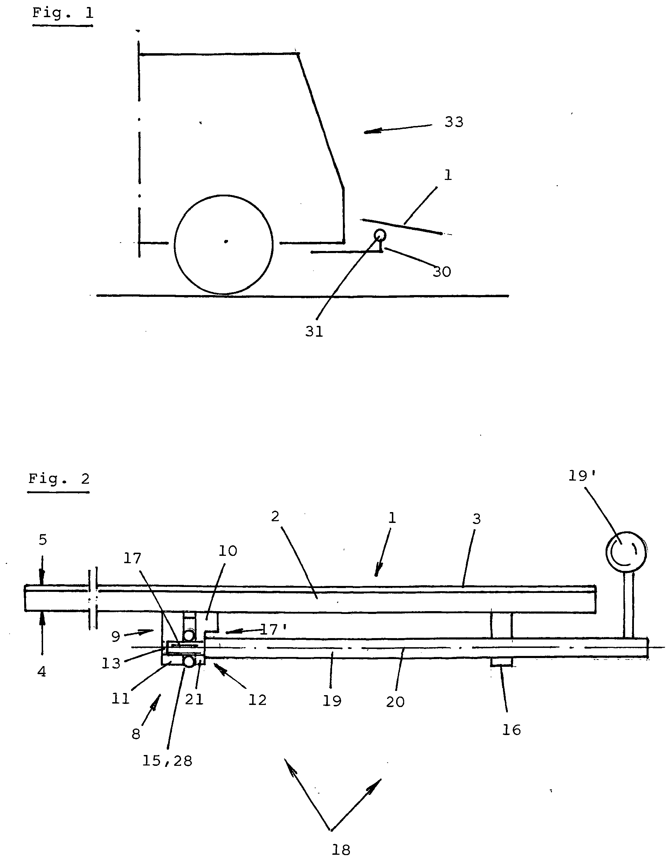

Fig. 1 zeigt die Rückseite eines üblichen PKWs 33 mit nach hinten ragender Anhängerkupplung 30 und mit einer auf dem Kugelkopf 31 der Anhängerkupplung 30 aufgesetzten Trittplatte 1.

In einer ersten Seitenansicht und teilweise geschnitten zeigt Fig. 2 die Trittplatte 1 in horizontaler Lage. Die Trittplatte 1 weist eine Plattform 2 auf, deren Oberseite 5 beispielsweise durch eine Gummiplatte 3 oder durch eine entsprechende rutschsichere Beschichtung gebildet ist. Die Plattform 2 trägt an ihrer Unterseite 4 ein Lager 16, in dem eine mit einem Griffansatz 19' versehene Spindel 19 drehbar gelagert ist. Im Beispiel ist der Griffansatz 19' als Kugelgriff gestaltet. Andere bekannte Formen eines Griffansatzes 19' sind möglich. Die Spindel 19, welche eine Verstelleinrichtung 18 bildet oder Teil einer mehrteiligen Verstelleinrichtung ist, endet in einem zylindrischen und geschlitzten Klemmstück 9, welches eine Klemmvorrichtung 8 bildet oder ebenso Teil einer mehrteiligen Klemmvorrichtung 8 sein kann. Rechnet man z. B. die Befestigungsmittel zum Befestigen der Klemmvorrichtung 8 an der Plattform 2 hinzu, ist das Klemmstück 9 Teil einer mehrteiligen Klemmvorrichtung 8. Das Klemmstück 9 kann mit einem Bodenstück ausgestattet sein, das zum Befestigen des Klemmstücks 9 an der Plattform genutzt werden kann. Es kann auch ohne Bodenstück und dafür als Hülse oder Ring gestaltet sein. Das ebenfalls an der Unterseite 4 der Plattform 2 befestigte Klemmstück 9 weist einen ersten Abschnitt 10 mit einer Durchgangsbohrung 12 auf, die durch ein Wandstück 21 des ersten Abschnitts 10 führt. Auf gleicher Achse, also auf der Längsachse 20 der Spindel 19 und der Durchgangsbohrung 12 gelegen, sowie durch einen Schlitz 15 getrennt, folgt in einem zweiten Abschnitt 11 des Klemmstücks 9 eine Gewindebohrung 13, in welche die Spindel 19 mit ihrem vorderen Ende eingeschraubt ist. Das vordere Ende ist durch einen Gewindeansatz 17 gebildet, dessen Durchmesser kleiner ist als der Durchmesser der Spindel 19. Dadurch ist an der Spindel 19 eine ringförmige Anschlagfläche 17' gebildet, welche am Wandstück 21 anliegt. Auf die Spindel 19 ist ein elastisches Zwischenstück 28, beispielsweise ein O-Ring aufgeschoben, der sich im Schlitz 15 befindet. Beim Klemmvorgang, also beim Verklemmen der Trittplatte 1 mit einem Kugelkopf 31 mit Hilfe der Spindel 19 und mit Hilfe des Klemmstücks 9 wird die horizontal gemessene Breite oder lichte Weite des Schlitzes 15 verringert und dadurch das elastische Zwischenstück 28 gepresst, so dass im elastischen Zwischenstück 28 eine Druckspannung aufgebaut ist. Das Klemmstück erfährt somit zumindest im Bereich der Abschnitte 10 und 11 eine geringfügige, jedoch ausreichende elastische Formveränderung. Beim Lösen der Trittplatte 1 vom Kugelkopf 31 wird durch entgegengesetztes Drehen der Spindel 19 und durch die vom elastischen Zwischenstück 28 ausgehende Druckkraft der Schlitz 15 wieder verbreitert, um erneut seine Ausgangslage einzunehmen, in welcher das Klemmstück 9 in der Lage ist, wieder einen Kugelkopf 31 aufzunehmen. Die Formveränderung des Klemmteils 9 ist aufgrund entsprechend geeigneter Werkstoffwahl reversibel. Es reicht somit eine geringfügige Veränderung der Breite des Schlitzes 15 aus, um ein Verklemmen oder Lösen der Trittplatte 1 zu ermöglichen. Es genügt daher eine einzige Umdrehung der Spindel 19 in die eine oder in die andere Richtung, oder sogar weniger. Die Zeichnung zeigt das elastische Zwischenstück 28 in nicht verspannter Lage.

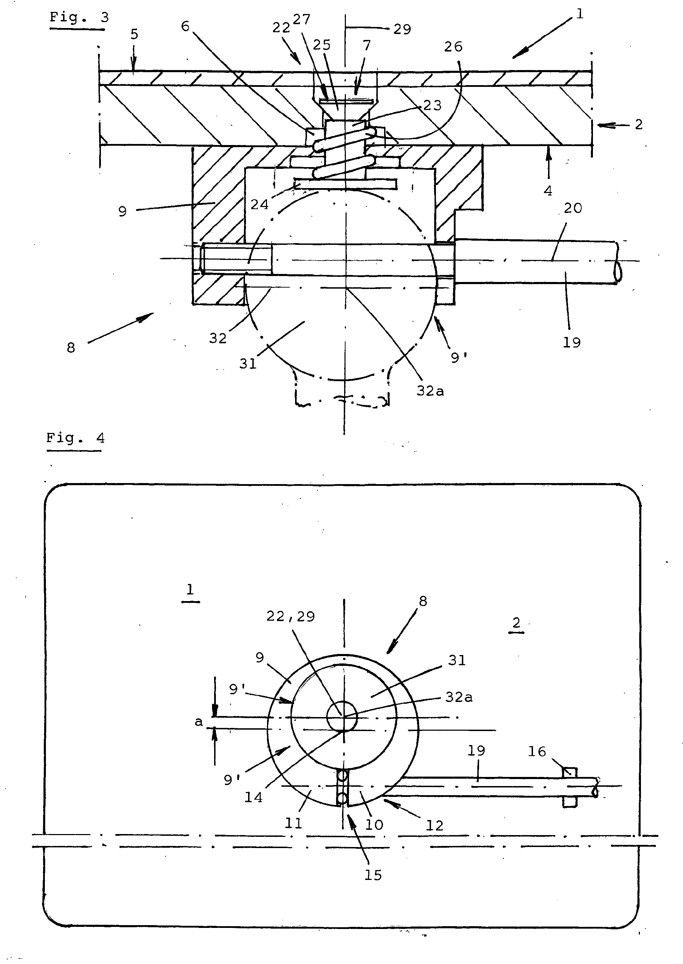

Fig. 3 zeigt in einer zweiten Seitenansicht die Trittplatte 1 in horizontaler Lage und ebenfalls teilweise geschnitten. Die Trittplatte 1 ist mit ihrem nach unten offenen Klemmstück 9 auf den Kugelkopf 31 einer Anhängerkupplung 30 aufgesetzt. Der Kugelkopf 31 befindet sich somit in einem vom Schlitz 15 unterbrochenen zylindrischen Raum 9' des Klemmstücks 9. Oberhalb des Kugelkopfes 31, dessen horizontale Achse mit 32 bezeichnet ist, befindet sich in der Plattform 2 eine vertikalbewegliche und federbeaufschlagte Sicherungseinrichtung 22. Die Sicherungseinrichtung 22 ragt teilweise in das Klemmstück 9 und weist ein auf einer senkrechten Achse 29 gelegenes vertikalbewegliches zylindrisches Schulterstück 23 auf, wobei das Schulterstück 23 mit seiner Unterseite an der oberen Begrenzung des Kugelkopfes 31 anliegt. In das Schulterstück 23 ist von oben her ein Schraubelement 25, beispielsweise eine Senkschraube als Stellglied eingeschraubt. Auf der senkrechten Achse 29 gelegen ist an der Unterseite 4 der Plattform 2 eine zylindrische Vertiefung 6 vorgesehen. Zwischen der Schulter 24 des Schulterstücks 23 und dem Ende der Vertiefung 6 ist eine auf dem Schulterstück 23 geführte Druckfeder 26 angeordnet. Die Plattform 2 weist zur Aufnahme des Schulterstücks 23 und des Schraubelements 25 einen entsprechend gestalteten Durchbruch 7 auf. In der Zeichnung nimmt die Trittplatte 1 keine gesicherte Lage auf dem Kugelkopf 31 ein. Erst wenn die Trittplatte 1 so weit nach unten gedrückt wird, dass sich die geometrische Längsachse 20 der Spindel 19 und der geometrische Mittelpunkt 32a des Kugelkopfs 31 auf einer gemeinsamen Ebene befinden, ist die optimale Lage der auf dem Kugelkopf 31 befindlichen Trittplatte 1 erreicht. In dieser Lage befindet sich dann die obere Ebene der Trittplatte 1 und die obere Begrenzung 27 der Sicherungseinrichtung 22, also die obere Begrenzung des Schraubelements 25 auf gleicher Höhe oder auf einer gemeinsamen horizontalen oder auch geneigten Ebene, was bedeutet, dass sich die Trittplatte 1 auch in geneigter Lage auf einen Kugelkopf 31 aufsetzen lässt. Die Sicherungseinrichtung 22 ist in dieser Position mit seinem Schraubelement 25 auf der Oberseite 5 der Plattform 2 sichtbar. In dieser Lage ist auch die Druckfeder 26 zusammengepresst. Nimmt man durch Lösen der Spindel 19 die Trittplatte 1 wieder vom Kugelkopf 31 ab, drückt die Druckfeder 26 das Schulterstück 23 mitsamt dem Schraubelement 25 wieder in jene Ausgangslage, wie aus der Zeichnung ersichtlich.

Fig. 4 zeigt die Trittplatte 1 in einer Unteransicht. Man erkennt das Lager 16, welches die Spindel 19 mit dem Griffansatz 19' drehbar trägt. Man erkennt ferner das an der Unterseite 4 der Plattform 2 mit beispielsweise drei Befestigungsmitteln, z. B. Schrauben befestigte Klemmstück 9. Die Zeichnung zeigt den ersten mit der Durchgangsbohrung 12 ausgestatteten Abschnitt 10 des Klemmstücks 9. Der Schlitz 15 trennt den zweiten Abschnitt 11 des Klemmrings 9 vom ersten Abschnitt 10. Die Spindel 19 ist im Lager 16 sowie im ersten Abschnitt 10 geführt und mit dem zweiten Abschnitt 11 verschraubt. In dem außermittig, also exzentrisch angeordneten und nach unten offenen zylindrischen Raum 9' des Klemmstücks 9 befindet sich der Kugelkopf 31 einer Anhängerkupplung 30. Die geometrische Achse 29 der Sicherungseinrichtung 22 führt durch den geometrischen Mittelpunkt 32a des Kugelkopfs 31, unabhängig davon, ob die Trittplatte 1 horizontal oder geneigt auf den Kugelkopf 31 aufgesetzt ist, siehe auch Fig. 3. Die in der Zeichnung senkrecht zur Bildebene angeordnete gemeinsame geometrische Achse 29 der Sicherungseinrichtung 22 sowie des Raums 9' einerseits und die gleichermaßen senkrechte Hauptachse 14 des zylindrischen Klemmstücks 9 andererseits sind durch den Abstand a voneinander entfernt, was die in der Zeichnung deutlich sichtbare außermittige Lage des Raums 9' am Klemmstück 9 entstehen lässt. Das Klemmstück 9 ist somit exzentrisch ausgebildet, was bei entsprechendem Drehen der Spindel 19 und der dabei entstehenden Hebelwirkung eine auf einen Kugelkopf 31 wirkende hohe Klemmkraft garantiert. Das Klemmstück 9 bzw. die senkrechte Achse 14 des Klemmstücks 9 kann, bezogen auf den Grundriss der Plattform 2 außermittig, also dezentral zum Grundriss der Plattform 2 angeordnet sein, beispielsweise in einem der vier Eckbereiche der Plattform 2. Dadurch kann die Trittplatte 1, bezogen auf die Rückseite eines PKWs 33, entweder nach rechts oder nach links weisend an der Anhängerkupplung 30 angebracht werden. Diese Möglichkeit erweist sich z. B. dann als zweckmäßig, wenn sich eine Hundebox im PKW 33 entweder auf der rechten oder auf der linken Seite befindet. Eine außermittige Anordnung des Klemmstücks 9 ist auch aus der Zeichnung ersichtlich. Gleichwohl kann das Klemmstück 9, bezogen auf den Grundriss der Plattform 2, auch zentral angeordnet sein.

## Patentansprüche

1. Trittplatte (1) zum Befestigen am Kugelkopf (31) einer PKW-Anhängerkupplung (30), mit einer Plattform (2), an deren Unterseite (4) eine zum Verklemmen mit dem Kugelkopf (31) bestimmte Klemmvorrichtung (8) vorgesehen ist, wobei die Klemmvorrichtung (8) einen nach unten offenen Raum (9') zur Aufnahme des Kugelkopfs (31) aufweist und eine an der Plattform (2) befindliche, den Klemmvorgang ermöglichende, von Hand betätigbare Verstelleinrichtung (18) vorgesehen ist, **dadurch gekennzeichnet, dass** die Klemmvorrichtung (8) ein mit einem Schlitz (15) ausgestattetes Klemmstück (9) aufweist oder durch ein mit einem Schlitz (15) ausgestattetes Klemmstück (9) gebildet ist, das den nach unten offenen Raum (9') aufweist, welcher durch den Schlitz (15) unterbrochen ist, wobei der Raum (9') außermittig am Klemmstück (9) angeordnet und eine in das Klemmstück (9) ragende Sicherungseinrichtung (22) vorgesehen ist, die von der Plattform (2) getragen wird und auf der Oberseite (5) der Plattform (2) sichtbar ist und zum Anliegen an den Kugelkopf (31) vorgesehen und vertikalbeweglich sowie federbeaufschlagt an und in der Plattform (2) angeordnet ist und wobei die Verstelleinrichtung (18) eine Spindel (19) aufweist oder durch eine Spindel (19) gebildet ist, die zum Verändern der Breite des am Klemmstück (9) befindlichen Schlitzes (15) bestimmt ist.

2. Trittplatte nach Anspruch 1, **dadurch gekennzeichnet, dass** der Schlitz (15) am Klemmstück (9) einen ersten (10) und einen zweiten Abschnitt (11) entstehen lässt, wobei im Schlitz (15) ein auf der Spindel (19) befindliches, zum Anliegen an den ersten und zweiten Abschnitt (10, 11) bestimmtes elastisches Zwischenstück (28) angeordnet ist.

3. Trittplatte nach Anspruch 2, **dadurch gekennzeichnet, dass** der erste Abschnitt (10) eine Durchgangsbohrung (12) und der zweite Abschnitt (11) eine Gewindebohrung (13) aufweist und dass die Spindel (19) durch die Durchgangsbohrung (12) hindurchgeführt ist, an einem Wandstück (21) des ersten Abschnitts (10) anliegt und mit der Gewindebohrung (13) des zweiten Abschnitts (11) verschraubt ist.

4. Trittplatte nach Anspruch 2, **dadurch gekennzeichnet, dass** im verspannten Zustand des Klemmstücks (9) mit dem Kugelkopf (31) das elastische Zwischenstück (28) zusammengepresst ist.

5. Trittplatte nach Anspruch 1, **dadurch gekennzeichnet, dass** die Sicherungseinrichtung (22) durch ein Schulterstück (23), durch ein mit dem Schulterstück (23) verbundenes Schraubelement (25) und durch eine Druckfeder (26) gebildet ist, die sich am Schulterstück (23) und an der Plattform (2) abstützt.

6. Trittplatte nach Anspruch 1, **dadurch gekennzeichnet, dass** sich im optimalen Klemmzustand zwischen dem Klemmstück (9) und einem Kugelkopf (31) die Längsachse (20) der Spindel (19) und der geometrische Mittelpunkt (32a) des Kugelkopfs (31) auf einer gemeinsamen Ebene befinden.

7. Trittplatte nach Anspruch 1, **dadurch gekennzeichnet, dass** das Klemmstück (9), und damit dessen senkrechte Hauptachse (14), außermittig zum Grundriss der Plattform (2) angeordnet sind.
